(19) Europäisches Patentamt
European Patent Office
Office européen des brevets

(11) **EP 3 712 524 A1**

(12) **EUROPEAN PATENT APPLICATION**

(43) Date of publication:
**23.09.2020 Bulletin 2020/39**

(51) Int Cl.:
***F24F 3/16*** *(2006.01)*     ***F24F 13/20*** *(2006.01)*
***F24F 13/32*** *(2006.01)*

(21) Application number: **20163888.9**

(22) Date of filing: **18.03.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.03.2019   KR 20190031509**

(71) Applicants:
• **LG Electronics Inc.**
  **07336 SEOUL (KR)**
• **Chungang University Industry Academic
  Cooperation
  Seoul 06974 (KR)**

(72) Inventors:
• **JEON, Jongkeon**
  **08592 Seoul (KR)**
• **CHUNG, Haeyoong**
  **08592 Seoul (KR)**
• **KANG, Jiyoung**
  **08592 Seoul (KR)**
• **LEE, David Kangseong**
  **08592 Seoul (KR)**
• **KWAK, Daeyoung**
  **06904 Seoul (KR)**
• **PARK, Sohee**
  **06985 Seoul (KR)**

(74) Representative: **Vossius & Partner
Patentanwälte Rechtsanwälte mbB
Siebertstrasse 3
81675 München (DE)**

(54) **AIR PURIFYING SYSTEM**

(57)     The present invention relates to an air purifying system comprising: at least two air purifying apparatuses capable of being operated independently; and a placement frame configured to prop and support from below the at least two air purifying apparatuses, the placement frame being configured to restrict movement thereof, wherein the placement frame (7) includes: a backbone extending in a vertical direction; and at least two pedestals supported by the backbone to extend forwardly, spaced apart from each other by a predetermined interval in the vertical direction, and corresponding to the at least two air purifying apparatuses, respectively.

FIG. 1

**Description**

This application claims priority to Korean Patent Application No. 10-2019-0031509, filed on March 19, 2019.

The present invention relates to an air purifying system.

The air purifying apparatus is an apparatus which suctions contaminated air to purify the contaminated air, and then discharges purified air.

For example, the air purifying apparatus may include a blowing device which flows outside air into the interior of the air purifying apparatus and discharges the outdoor air to the outside, and a filter capable of filtering dust, bacteria, and the like. Generally, an air purifying apparatus is configured to purify an indoor space such as a home or office.

The air purifying apparatus is manufactured to a predetermined standard and size according to a predetermined design and supplied to the market. The consumer purchases an air purifying apparatus that matches the size and capacity desired.

It is difficult for a consumer to purchase an air purifying apparatus suited to his or her residential environment due to the presence of a plurality of partitioned indoor spaces and the shape of an atypical indoor space in his or her residential environment.

In order to solve this problem, WO2017/026761A1 discloses an air purifying apparatus capable of varying the suction and discharge of air based on a deformable filter. The present technique can modify the filter corresponding to the installation environment of the air purifying apparatus and implement an air purifying apparatus corresponding to the capacity of the present indoor space.

According to the above technique, the inconvenience that it is difficult for the user to determine what shape the filter should be implemented, the user has to directly modify the filter, and the air can be cleaned only in one space remains.

The present invention is proposed under the background described above and proposes an air purifying system which can use a single air purifying system so that a consumer can directly variously operate the air purifying apparatus in a suitable place so as to suit his/her residential environment.

The present invention proposes an air purifying system which can perform air purifying for a required space by simply moving an individual element to a required place and operating without requiring operation of a user.

The present invention proposes an air purifying system capable of responding to needs for a capacity of installation space, needs for individual taste, and environmental needs.

The present invention proposes an air purifying system in which an air purifying apparatus which is free to separate and mount can be used in a more convenient and various manner.

The air purifying system according to the present invention includes at least two air purifying apparatuses capable of independently operating; and a placement frame which props and supports the lower sides of the at least two air purifying apparatuses and limiting the movement of the air purifying apparatuses, and, according to this, air in a partitioned large space can be purified more efficiently.

The placement frame includes: a backbone extending in a vertical direction; at least two pedestals supported by the backbone, extending forwardly spaced apart by a predetermined interval in the vertical direction and corresponding respectively to the at least two air purifying apparatuses; and an illumination light provided on the back surface of the backbone. Indirect illumination can be performed using the illumination light so that the user can more conveniently use the air purifying system.

The backbone is provided with a wireless charging module, and another wireless charging module corresponding to the wireless charging module is provided in any one of the at least two air purifying apparatuses. In this case, the wireless charging can be performed automatically by the spaced air purifying apparatuses being seated on the placement frame. Thus, the user can more conveniently use the air purifying system.

The pedestal is provided with a wireless charging module, and another wireless charging module corresponding to the wireless charging module is provided in any one of the at least two air purifying apparatuses. In this case, there is an advantage that the air purifying apparatus can be charged by completely mounting the air purifying apparatus on the pedestal. Thus, the user can more conveniently use the air purifying system.

In a case where one of the air purifying apparatuses is fixed to the placement frame, there is an advantage that the placement frame can perform the own air purifying function thereof, which is more convenient.

At least one of the at least two air purifying apparatuses may be guided along the rails and mounted on the pedestal. According to this, the air purifying apparatuses can be seated in the correct position.

When the seating is completed along the rail, the placement frame and the air purifying apparatus can be connected to each other. Therefore, there is an advantage that the user becomes convenient.

According to another aspect of the present invention, there is provided an air purifying system including: at least two air purifying apparatuses capable of independently operating; and a placement frame which props and supports the lower sides of the at least two air purifying apparatuses and limits the movement thereof, in which the placement frame includes: a backbone extending in a vertical direction; and at least two pedestals supported by the backbone, spaced apart by a predetermined interval in the vertical direction and extending forward, and corresponding to at least two air purifying apparatuses, respectively, in which at least one of the backbone and the pedestal includes a charging module for charging the air purifying apparatus. This has the advantage of being convenient for the user since the air purifying apparatuses placed in the placement frame can be automatically charged.

According to the present invention, at least two air purifying apparatuses suitable for a plurality of partitioned indoor spaces are integrated into a single air purifying system. According to this, clean air can be suitably supplied to the plurality of indoor spaces at the same time.

According to the present invention, the individual air purifying apparatus is convenient to move and remain in a state of being charged with energy. Thus, the user can perform the optimal air purifying operation only by carrying the air purifying apparatus of the desired capacity and moving the air purifying apparatus to a necessary place and driving the air purifying apparatus.

According to the present invention, it is possible to provide a more various air purifying operation by using a plurality of individual elements together or corresponding to the specific purpose. This makes it possible to use the air purifying system optimally corresponding to the more diverse needs of consumers.

According to the present invention, an air purifying system can be conveniently used because a separated air purifying apparatus is mounted and the charge is possible and illumination can be controlled.

## BRIEF DESCRIPTION OF THE DRAWINGS

Fig. 1 is a rear perspective view illustrating an air purifying system.
Fig. 2 is a view for explaining a separation method of each air purifying apparatus.
Fig. 3 is a vertical sectional view illustrating a first stage air purifying apparatus.
Fig. 4 is an exploded perspective view illustrating a configuration directly related to an air blowing device inside an air purifying apparatus.
Fig. 5 is a schematic sectional view illustrating a placement frame.
Fig. 6 is a sectional view illustrating a second stage air purifying apparatus.
Fig. 7 is a rear perspective view illustrating the second stage air purifying apparatus.
Fig. 8 is a sectional view illustrating a third stage air purifying apparatus.
Fig. 9 is a rear perspective view illustrating the air purifying system in a state where the third stage air purifying apparatus is separated.
Fig. 10 is a view schematically illustrating a relationship of the second stage air purifying apparatus and the placement frame into which the second stage air purifying apparatus is inserted.
Fig. 11 is a front perspective view illustrating the third stage air purifying apparatus.

Fig. 12 is a view for explaining the action of a second stage flow path guide.
Fig. 13 is a block diagram illustrating the air purifying apparatus.

## DETAILED DESCRIPTION OF THE EMBODIMENTS

In the following description, the air purifying system can be operated in cooperation with at least two air purifying apparatuses capable of individually operating in a single space. The air purifying system may be such that at least two air purifying apparatuses capable of individually operating can be integrated together by other elements. The air purifying system may be separated from the other elements by at least one air purifying apparatuses capable of individually operating. The air purifying system may be separated from the at least two air purifying apparatuses capable of individually operating so that individual operation can be performed in different environments from each other.

In the following description, a larger number may be included, when it is not unusual to point out the number, such as one or two, or when there is no special description.

In the following description, as the reference of the direction, the front of the air purifying system to which the user mainly approaches is referred to as front, and the other direction display is based on the user.

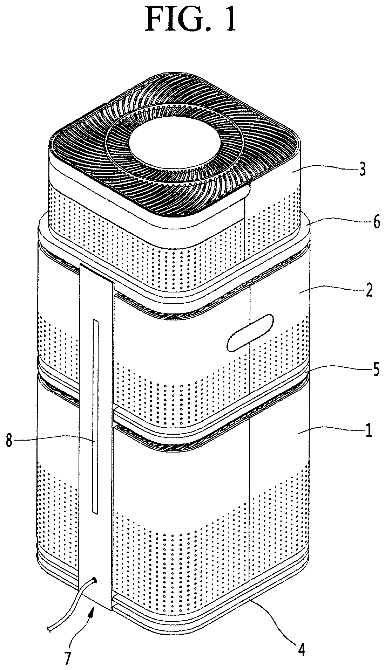

Fig. 1 is a rear perspective view illustrating an air purifying system according to an embodiment.

Referring to Fig. 1, the air purifying system according to the embodiment includes three air purifying apparatuses 1, 2, and 3 capable of independently operating, and a placement frame in which three air purifying apparatuses 1, 2 and 3 are assembled together and are placed. While the three air purifying apparatuses 1, 2 and 3 can move to various places in the indoor space, the placement frame 7 allows movement of the air purifying apparatuses while the movement of the placement frame 7 is limited. Here, the meaning of the limited movement is associated whether or not there is the limit in moving the placement frame by himself or herself when the user desires, and how often the placement frame moves when using the air purifying system.

The placement frame 7 includes a backbone 8 extending in the rear intermediate portion in the vertical direction, a first stage pedestal 4 extending forward from a bottom portion of the backbone 8, a second stage pedestal 5 which is placed on the upper side spaced apart from the first end pedestal 4 and extending forward in the backbone 8, and a third stage pedestal 6 which is placed on the upper side spaced apart from the second stage pedestal 5 and is extended from the backbone in the front direction.

Each of the air purifying apparatuses 1, 2, and 3 may be provided in a square section for the convenience of handling. Each of the pedestals 4, 5, and 6 may be provided as a square frame corresponding to the horizontal sectional shape of the respective air purifying apparatus 1. Each of the pedestals may be provided with a larger square as compared with each of the air purifying apparatuses. Thus, each air purifying apparatuses can be sufficiently supported.

On the upper surface of each of the pedestals 4, 5, and 6, the air purifying apparatus 1 having the same stage number as each stage number can be placed. Each of the air purifying apparatuses 1, 2, and 3 may be separated from each of the pedestals 4, 5, and 6 and used separately at different places.

In the above description, it is described that the first stage air purifying apparatus 1 is placed on the first stage pedestal 4 and thus is supported as a separate article. However, the present invention is not limited thereto, and the first stage pedestal 4 may be integrated with the first stage air purifying apparatus 1. In this case, the integral components of the first stage pedestal 4 and the first stage air purifying apparatus 1 are provided as a rigid base frame to support the overall load of the air purifying system according to the embodiment. In the opposite case, the base of the first stage air purifying apparatus 1 may be the first stage pedestal 4.

In the air purifying system according to the embodiment, it is assumed a case where the base of the first stage air purifying apparatus 1 is the first stage pedestal 4. In this case, the first stage air purifying apparatus 1 can be integrated with the placement frame 7 as well. The placement frame 7 and the first stage air purifying apparatus 1 are one unit and can be positioned in the widest space of the general residence space, such as a living room.

The second stage air purifying apparatus 2 may have an air purifying capacity smaller than that of the first stage air purifying apparatus 1 and can have an air purifying capacity larger than that of the third stage air purifying apparatus 3. It can be considered that the ratio of the air purifying capacity of the first, second, and third stage air purifying apparatus 1, 2, 3 is preferably 5: 3: 2 respectively.

In this case, the first stage air purifying apparatus 1 can be suitably used in a space such as a living room, the second stage air purifying apparatus 2 can be suitably used in a space such as an inner room, and the third stage air purifying apparatus 3 can be suitably used in a space such as a small room or a bathroom or a kitchen.

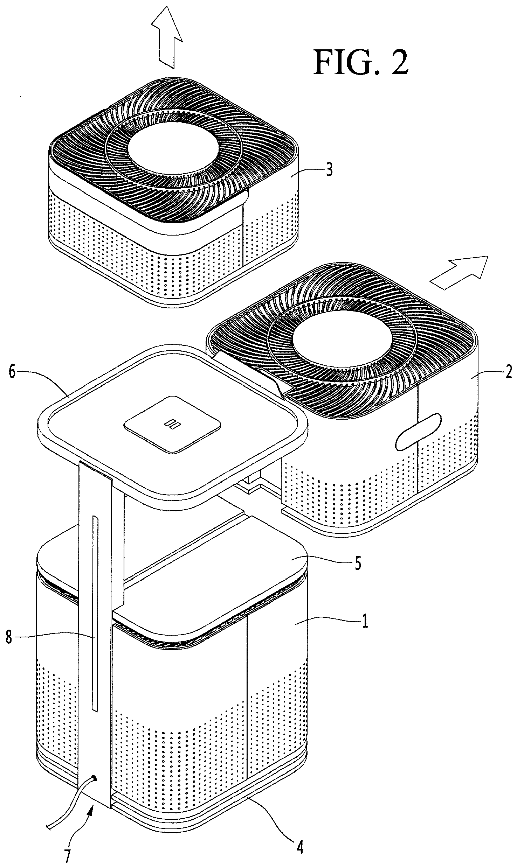

Fig. 2 is a view for explaining a separation method of each of the air purifying apparatuses.

Referring to Fig. 2, the first stage air purifying apparatus 1 is one body with the placement frame 7, and can have the largest load among the respective air purifying apparatus 1. Therefore, the center of gravity of the air purifying system according to the embodiment is moved downward, thereby preventing reversal of the placement frame 7 due to an external impact and preventing breakage of the product.

The second stage air purifying apparatus 2 is slid rearward and can be mounted on a corresponding pedestal of the placement frame 7. The separation of the second stage air purifying apparatus 2 can be performed by moving forward. The second stage air purifying apparatus 2 can be seated on or separated from the placement frame by sliding in the front and rear direction.

The third stage air purifying apparatus 3 can be moved downward and mounted on a corresponding pedestal of the placement frame 7. The separation of the third stage air purifying apparatus 3 can be performed by moving upward. The third stage air purifying apparatus 3 can be seated or separated from the placement frame by moving in the vertical direction.

When the second and third stage air purifying apparatuses 2 and 3 are mounted on the respective pedestals 5 and 6, the placement frame 7 and each air purifying apparatus 2 and 3 are connected and communication may be performed. When the second and third stage air purifying apparatuses 2 and 3 are mounted on each of the pedestals 5 and 6, each of the air purifying apparatuses 2 and 3 can receive energy from the placement frame 7. At least one of wired charging and wireless charging can be applied to power supply from the placement frame 7 to each of the air purifying apparatuses 2 and 3.

Each of the first, second, and third stage air purifying apparatuses 1, 2, and 3 may have a fan and a filter therein. The fan provides negative pressure. By the negative pressure, air can be suctioned through one side to filter out foreign matter, and clean air can be discharged through the other side.

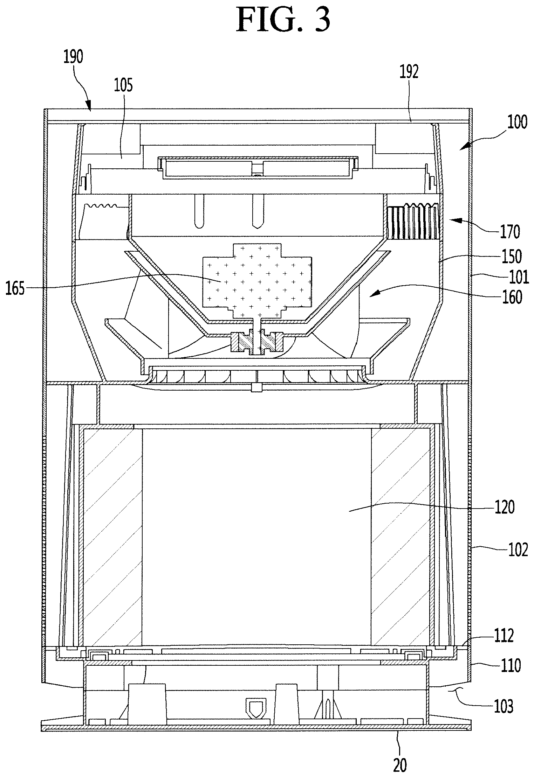

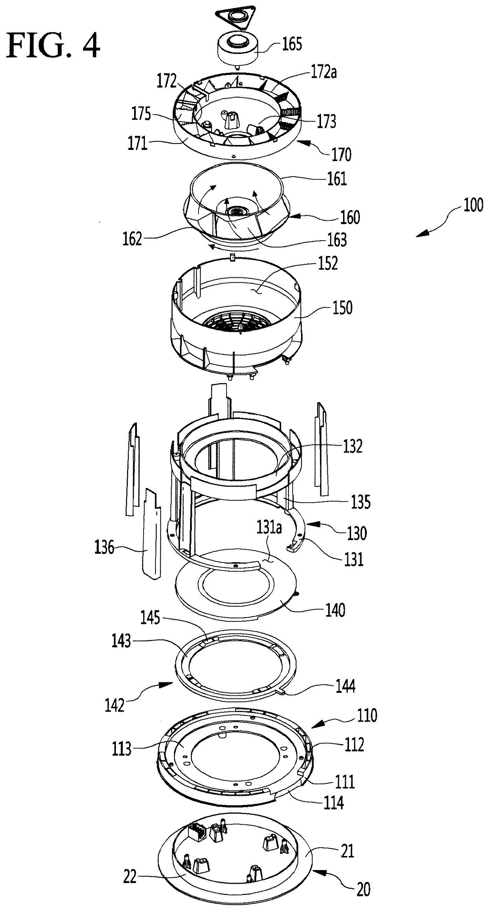

Fig. 3 is a vertical sectional view illustrating the air purifying apparatus according to the embodiment, and Fig. 4 is an exploded perspective view illustrating a configuration directly relating to the air blowing device in the air purifying apparatus according to the embodiment.

Although the air purifying apparatuses 1, 2, and 3 are provided in a similar configuration, the height in the vertical direction may differ, and the width in the lateral direction may differ. For example, the first stage air purifying apparatus may have higher vertical height and a larger lateral width than the third stage air purifying apparatus. The first stage air purifying apparatus is higher in height in the vertical direction than the second stage air purifying apparatus, but the widths in the lateral direction can be the same.

The air blowing device of the embodiment is provided with a circular sectional structure inside each air purifying apparatus 1 having a square section. Therefore, if the incision line of the sectional view of Fig. 3 is taken as a diagonal line of a square, the case 101 and the air blowing device 100 may be further spaced apart from each other.

The internal configuration of the air purifying apparatus can be similarly applied to each air purifying apparatus, and the first stage air purifying apparatus 1 will be described as an example in the embodiment.

Referring to Figs. 3 and 4, the air purifying apparatus 1 according to the embodiment can generate an airflow. In this case, the airflow may be provided by a process of suctioning the indoor air existing on the lower side of the air purifying apparatus 1 and discharging the suctioned indoor air to the upper portion.

The air purifying apparatus 1 includes a case 101 forming an outer appearance. The case 101 may be provided in a square container. The air purifying apparatus 1 may be referred to as an air purifying module in that the air purifying apparatus has a filter and functions to purify the air.

The case 101 may include a separation portion (not illustrated) in which two parts constituting the case 101 are coupled or separated. The case 101 may further include a hinge portion (not illustrated) provided on the opposite side of the separation portion. The two parts can relatively rotate about the hinge portion. Therefore, when at least one part of the two parts rotates, the case 101 is opened and can be rotated and separated from the air purifying apparatus 1. The case 101 can be opened to replace or repair the internal components of the case 101. For example, a filter 120 can be replaced.

A case-side suction portion 102 through which air is suctioned is formed in the lower portion of the case 101. The case-side suction portion 102 may be provided with a through-hole formed through at least a portion of the case 101. A plurality of case-side suction portions 102 is formed.

The plurality of case-side suction portions 102 may be uniformly formed in the circumferential direction along the outer circumferential surface of the case 101 so that air can be suctioned in any direction with respect to the case 101. In other words, air can be suctioned substantially in the direction of 360 degrees with respect to the vertical center line passing through the inner center of the case 101.

A plurality of case-side suction portions 102 are formed along the outer circumferential surface of the case 101 so that the suction amount of air can be increased. The air suctioned through the case-side suction portion 102 can flow in a substantially radial direction from the outer circumferential surface of the case 101.

Referring to Fig. 3, the vertical direction is referred to as an axial direction, and the horizontal direction is referred to as a radial direction.

The axial direction may correspond to the central axis direction of the fan 160, that is, the motor axial direction of the fan. The radial direction can be understood as a direction perpendicular to the axial direction. The imaginary circular direction formed when rotating about the axial direction and referring the distance in the radial direction to as the rotation radius can be referred to as the circumferential direction.

The air purifying apparatus 1 may include a base 20 provided below the case 101 and placed on the floor. The base 20 may be spaced downward from the lower end portion of the case 101 by a predetermined distance. The base-side suction portion 103 may be formed in the spacing space between the case 101 and the base 20.

The air suctioned through the base-side suction portion 103 can flow upward through the suction port 112 of the suction grill 110 provided on the upper side of the base 20.

The air purifying apparatus 1 may include a plurality of suction portions 102 and 103. The air present in the lower portion of the indoor space can easily flow into the air purifying apparatus 1 through the plurality of suction portions 102 and 103. Therefore, the suction amount of air can be increased.

A discharge portion 105 may be formed on the upper portion of the air purifying apparatus 1. The discharge portion 105 may be formed in a discharge grill of a discharge guide device 190 provided in the air purifying apparatus 1. The discharge guide device 190 forms an outer appearance of an upper-end portion of the air purifying apparatus 1.

The air discharged through the discharge portion 105 flows upward in the axial direction. The clean air discharged through the discharge portion 105 can be spread radially by the discharge grill 192. The discharge grill 192 is provided in a spiral shape and the clean air discharged through the discharge portion 105 can have a component spreading in the circumferential direction by the discharge grill 192.

The air purifying apparatus 1 may further include a suction grill 110 disposed on the upper side of the base 20. The base 20 may include a base main body 21 placed on the floor and a base protrusion 22 protruding upward from the base main body 21 and on which the suction grill 110 is placed.

By the base protrusion 22, the base main body 21 and the suction grill 110 can be spaced apart from each other. Between the base 20 and the suction grill 110, a base-side suction portion 103 forming an air suction space may be provided.

The suction grill 110 may include a substantially ring-shaped grill main body 111 and a suction port 112 formed at an edge portion of the grill main body 111. A plurality of suction ports 112 may be spaced apart from each other along the edge portion. The plurality of suction ports 112 may communicate with the base-side suction port 103.

The air purifying apparatus 1 may further include a filter member 120 disposed above the suction grill 110 and filtering air.

The air suctioned through the suction portions 102 and 103 can pass through the filter member 120. Air can flow through the outer circumferential surface of the cylindrical filter member 120 and into the inside thereof. The filter member 120 may have a filter surface having a cylindrical shape and filtering air.

The suction grill 110 may further include a lever support portion 113 which forms an upper surface of the grill main body 111 and supports the lever device 142, and a groove portion 114 which is formed to be recessed from the outer circumferential surface of the grill main body 111 in an inner radial direction. The groove portion 114 may provide a space through which the handle 144 can move.

The air purifying apparatus 1 is provided with a lever device 142 provided on the suction grill 110 and operable by a user. The lever device 142 may include a lever main body 143 having a substantially ring shape and being rotatably provided.

The lever main body 143 may include a lever protrusion 145 provided at an edge portion of the lever main body 143. A plurality of lever protrusions 145 protrude upward from the upper surface of the edge portion of the lever main body 143 and may be spaced apart from each other. The plurality of lever protrusions 145 can be understood as a configuration having an inclined surface in order to move the support device 140, which will be described later, upward or downward.

On the outer circumferential surface of the lever main body 143, a handle 144 is provided. The user can hold the handle 144 and rotate the lever main body 143 in a clockwise direction or in a counterclockwise direction.

The air purifying apparatus 1 further includes a supporting device 140 for supporting the filter member 120 on the lever device 142. The lever device 142 supports the lower surface of the support device 140. The support device 140 may include a support protrusion (not illustrated) which is in contact with the lever protrusion 145. The support protrusion may protrude downward from the lower surface of the support device 140 and a plurality of protrusions corresponding to the number of the lever protrusions 145 may be provided. The support protrusion may include an inclined surface.

The lever protrusion 145 may be rotated together with the lever main body 143 in a process of the rotation of the lever main body 143. At this time, when the upper portion of the lever protrusion 145 comes into contact with the lower portion of the support protrusion, the lever main body 143 pushes up the support device 140 upward. When the supporting device 140 moves upward, the filter member 120 is coupled to the air purifying apparatus 1.

On the other hand, when the lower portion of the lever protrusion 145 abuts the upper portion of the support protrusion, the support device 140 is lowered downward. When the support device 140 is lowered downward, the filter member 120 is in a separable state (released state) from the air purifying apparatus 1.

The air purifying apparatus 1 may further include a filter frame 130 forming a space for mounting the filter member 120. The filter frame 130 may include a first frame 131 forming a lower portion of the filter frame 130 and a second frame 132 forming an upper portion of the filter frame 130.

The first frame 131 may have an approximately partially cut-out ring shape. The ring-shaped inner space of the first frame 131 may form at least a portion of the airflow path passing through the filter frame 130.

The lever device 142 and the support device 140 may be positioned on a side of the inner circumferential surface of the first frame 131. On the upper surface of the support device 140, a seating surface on which the filter member 120 is placed may be provided. A handle space portion 131a for allowing the handle 144 of the lever device 142 to be operated can be defined in the cut some space of the first frame 131.

The handle 144 is positioned in the handle space portion 131a and can be operated in the clockwise direction or in the counterclockwise direction.

The second frame 132 may be positioned to be spaced upward from the first frame 131. The second frame 132 has a substantial ring shape. The ring-shaped internal space of the second frame 132 may form at least a portion of the airflow path passing through the filter frame 130. The upper portion of the second frame 132 can support the fan housing 150, which will be described later. The skirt on the outer periphery of the second frame 132 can maintain the mounting state of the filter member 120 by holding the lifted filter member 120.

The filter frame 130 may further include a filter support portion 135 extending upward from the first frame 131 toward the second frame 132. The first and second frames 131 and 132 may be spaced apart from each other by the filter support portion 135. A plurality of filter support portions 135 may be provided and the plurality of filter support portions 135 may be arranged in the circumferential direction and connected to the edge portions of the first and second frames 131 and 132.

The mounting space of the filter member 120 may be defined by the first and second frames 131 and 132 and the plurality of filter support portions 135.

In the mounting space, the filter member 120 can be detachably mounted. The filter member 120 has a cylindrical shape, and air can be introduced through the outer circumferential surface of the filter member 120. In the process of passing through the filter member 120, impurities such as fine dust in the air can be filtered.

Since the filter member 120 has a cylindrical shape, it is possible to introduce air in any direction with respect to the filter member 120. Accordingly, the filtering area of the air can be increased.

The mounting space may be formed in a cylindrical shape corresponding to the shape of the filter member 120. The filter member 120 may be slidably pulled in toward the mounting space in the mounting process. On the contrary, the filter member 120 can be slidably pulled out from the mounting space in the separating process.

A case where the filter member is separated will be described. When the handle 144 is operated in a state where the filter member 120 is placed on the upper surface of the support device 140, the filter member 120 moves downward and is in the release position. The filter member 120 may be slid radially outward and separated from the mounting space.

A case where the filter member is mounted will be described. The filter member 120 may be slid radially inward toward the mounting space and may be placed on the upper surface of the support device 140. The filter member 120 can be brought close to the upper side by the operation of the handle 144, and the filter member 120 can be placed at the coupling position.

A support cover 136 may be coupled to the outside of the filter support portion 135.

The air purifying apparatus 1 is provided with an air blowing device 100 for providing a flow pressure of air so that air is suctioned into the suction ports 102 and 103. The air blowing device 100 may be disposed on the upper side of the filter member 120 to allow the filtered air passing through the filter member 120 to flow upward.

The air blowing device 100 may include a fan housing 150 installed on the outlet side of the filter member 120. A fan 160 is received in the fan housing 150. The fan housing 150 may be supported by the filter frame 130.

A fan inlet portion 152 for guiding the inflow of air into the fan housing 150 is included in the lower portion of the fan housing 150. The fan inlet portion 152 may be provided with a grill. The grill can prevent a foreign matter such as a finger from being in contact with the air purifying apparatus and prevent the air purifying apparatus from being damaged when the filter member 120 is separated and the inside thereof is empty.

The air blowing device 100 may further include a fan 160 which provides a flow pressure of air through the rotation. The fan 160 may be positioned above the fan inlet portion 152. The fan 160 may be provided with a centrifugal fan for introducing air in the axial direction and discharging air upward in the radial direction.

The fan 160 may include a hub 161 to which a rotation shaft of a fan motor 165 which is a centrifugal fan motor is coupled, a shroud 162 to be spaced apart from the hub 161, a plurality of blades 163 disposed between the hub 161 and the shroud 162. The fan motor 165 may be coupled to the upper side of the fan 160.

The hub 161 may have a bowl shape whose diameter decreases toward the downward direction. The hub 161 may include a shaft coupling portion to which the rotation shaft is coupled and a first blade coupling portion which extends upward from the shaft coupling portion in an inclined manner.

The shroud 162 may include a lower end portion formed with a shroud suction port through which the air passing through the fan inlet portion 152 is suctioned, and a second blade coupling portion extending upward from the lower end portion.

One surface of the blade 163 can be coupled to the first blade coupling portion of the hub 161 and the other surface thereof can be coupled to the second blade coupling portion of the shroud 162. The plurality of blades 163 may be spaced apart from each other in the circumferential direction of the hub 161.

The air passing through the filter member 120 flows into the fan housing 150 through the fan inlet portion 152 while flowing upward. The airflows in the axial direction of the fan 160 and flows out through the blade 163. At this time, the edge of the blade may extend to be inclined outwardly upward with respect to the axial direction, corresponding to the flow direction of the air, so that the outflow air can flow upward in the radial direction.

The air blowing device 100 may further include an air guide device 170 coupled to the upper side of the fan 160 to guide the flow of the air passing through the fan 160. The air guide device 170 may be positioned above the fan housing 150. For example, the air guide device 170 may be stacked to have the same outer diameter as the fan housing 150 to guide the flow of the air passing through the fan 160.

The air guide device 170 may include an outer wall 171 having a cylindrical shape and an inner wall 172 positioned inside the outer wall 171 and having a cylindrical shape. The outer wall 171 may be disposed to surround the inner wall 172. A first airflow path 172a through which airflows may be formed between the inner circumferential surface of the outer wall 171 and the outer circumferential surface of the inner wall 172.

In other words, the diameter of the outer wall 171 is larger than the diameter of the inner wall 172.

The diameter of the outer wall 171 can be understood as the outer diameter of the air guide device 170 and the diameter of the inner wall 172 can be understood as the inner diameter of the air guide device 170.

The air guide device 170 may further include a motor receiving portion 173 extending downward from the inner wall 172 to receive the fan motor 165. The motor receiving portion 173 may have a bowl shape whose diameter decreases toward the lower portion. A motor coupling portion is provided on one side of the fan motor 165 and the motor coupling portion can guide the fan motor 165 so as to be fixed to the air guide device 170.

The shape of the motor receiving portion 173 may correspond to the shape of the hub 161. The motor receiving portion 173 may be inserted into the hub 161.

The fan motor 165 may be supported on the upper side of the motor receiving portion 173. The rotation shaft of the fan motor 165 extends downward from the fan motor 165 and may be coupled to the shaft coupling portion of the hub 161 through the bottom portion of the motor receiving portion 173.

The air guide device 170 may further include a guide vane 175 disposed in the first airflow path 172a. The guide vane 175 extends from the outer circumferential surface of the inner wall 172 to the inner circumferential surface of the outer wall 171. A plurality of guide vanes 175 may be spaced apart from one another.

The plurality of guide vanes 175 may function to guide airflow into the first airflow path 172a of the air guide device 170 through the fan 160 upward.

The guide vane 175 may extend upwardly inclined from the lower portion of the outer wall 171 and the inner wall 172. For example, the guide vane 175 may be rounded to guide the air to flow upward.

The air blowing device 100 further includes a discharge guide device 190 having a discharge portion 105 so that air passing through the air guide device 170 can be discharged to the outside. The discharge portion 105 is provided with a discharge grill 192 so that clean air output in the axial direction and the radial direction can have a flowing component in the circumferential direction. For this operation, it has been described that the discharge grill 192 can be provided in a spiral shape.

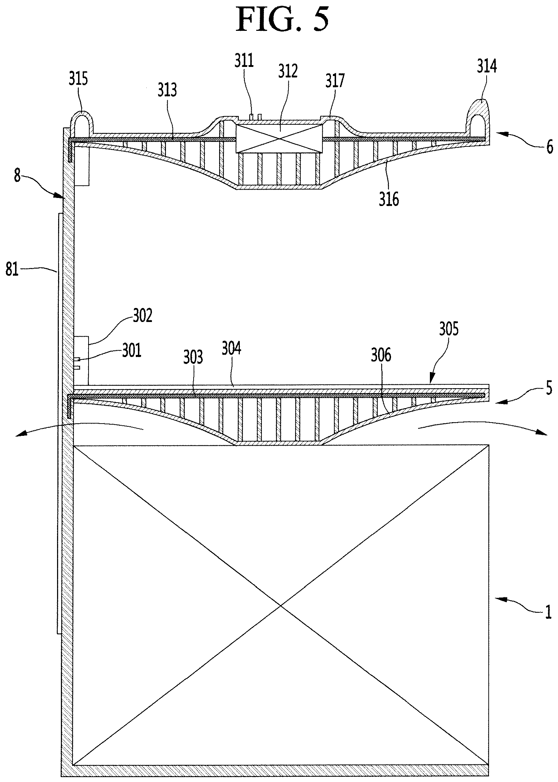

Fig. 5 is a schematic sectional view illustrating the placement frame.

Referring to Fig. 5, the placement frame 7 includes a backbone 8 using the bottom of the first stage air purifying apparatus 1 as a base and extending from the rear end of the first stage air purifying apparatus 1 to the upper side.

The backbone 8 serves as a frame for supporting loads of the first stage air purifying apparatus 1 and the respective sub-components placed on the first stage air purifying apparatus 1. The backbone 8 may be formed in a bar shape to be long in the vertical direction and may be used a member of a rigid material such as a resin material in which the steel frame is received inside, a painted steel frame, or wood material.

The backbone 8 may be provided with an illumination light 81 fastened in the longitudinal direction of the backbone. The illumination light 81 may notify the user of the position of the air purifying system, notify the user of the operating state of the air purifying system, or performs a role of the illumination light with respect to the indoor space by illuminating the visible light.

A second stage pedestal 5 supporting the second stage air purifying apparatus 2 extends from the backbone 8 forward at a height slightly higher than the first stage air purifying apparatus 1. The second stage pedestal 5 may be fastened or supported on the upper-end portion of the first stage air purifying apparatus 1 or may be fastened to the backbone 8. In the drawing, the second stage pedestal 5 is illustrated as being fastened to the backbone 8.

The second stage pedestal 5 may have a square bottom surface similar to the sectional shape of the second stage air purifying apparatus 2. The second stage pedestal 5 is provided to be slightly larger than the second stage air purifying apparatus 2 in order to guide stably a process of seating the second stage air purifying apparatus 2 and to support the seated second stage pedestal 5.

The second stage pedestal 5 may include a second stage frame 305 provided with a square frame and a second stage beam 303 which is placed inside or outside second stage frame in order to support the load of the second stage frame 305 and the load of the second stage air purifying apparatus 2. The second stage frame 305 mainly serves to evenly prop the entire bottom surface of the second stage air purifying apparatus 2 and to support the load of the second stage air purifying apparatus. The second stage frame 305 may be made of a metal material having high strength, and the second stage beam 303 may be made of resin.

Although the second stage frame 305 and the second stage beam 303 are described as separate members, the second stage frame 305 and the second stage beam 303 are not limited thereto. As another example, it is also possible to provide the integral second stage beam 303 by providing the same members which are connected to each other in a different thickness while being injected or by further providing a lattice-shaped frame.

A rail 304, which protrudes upward and extends to be long in the longitudinal direction, may be provided on the upper surface of the second stage frame 305. A second stage connection terminal 301 and a second stage wireless charging module 302 are provided in the backbone 8 adjacent to the rear portion of the second stage frame 305.

The action of the rail 304, the second stage connection terminal 301, and the second stage wireless charging module 302 will be described with reference to other drawings.

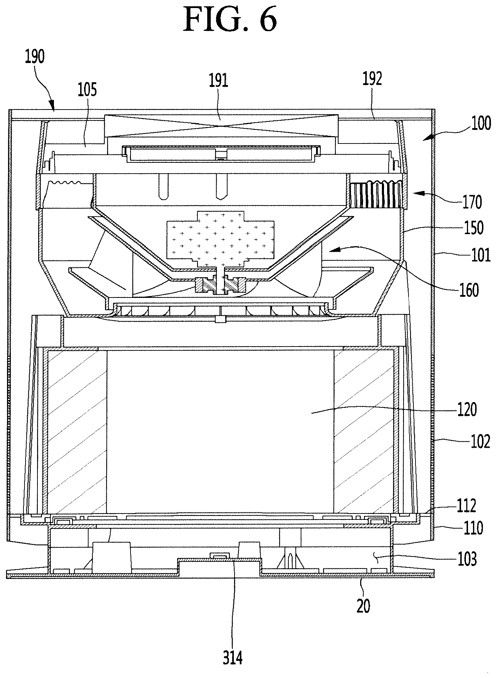

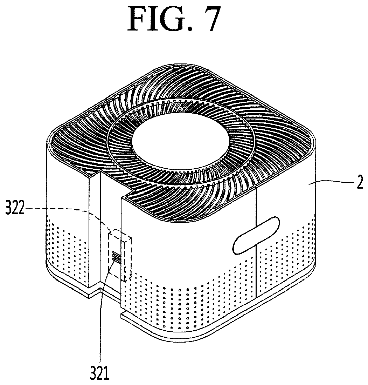

Fig. 6 is a sectional view of the second stage air purifying apparatus, and Fig. 7 is a rear perspective view of the second stage air purifying apparatus.

Referring to Fig. 6, the second stage air purifying apparatus 2 may be provided at a lower height than the first stage air purifying apparatus 1, and capacity thereof may be provided smaller than the first stage air purifying apparatus 1. The function and action of the second stage air purifying apparatus 2 can be provided similar to the first stage air purifying apparatus 1, but the air purifying capacity thereof can be provided slightly smaller.

A rail seating groove 314 may be provided on the lower surface of the second stage air purifying apparatus 2. The rail seating groove 314 may be provided corresponding to the rail 304. Here, the meaning of correspondence means that the rail seating groove and the rail extend in correspondence with each other in the front and rear direction in which the second stage air purifying apparatus 2 is seated.

The installation position of the rail 304 and the rail seating groove 314 may be opposite to each other. However, at this time, it is preferable that the rail is provided so as to be recessed from the bottom of the second stage air purifying apparatus 2 to the inner surface. This is because the protruding rails can be interrupted when the second stage air purifying apparatus 2 is used separately from the placement frame 7.

Referring to Fig. 7, a second stage connection portion 321 corresponding to the second stage connection terminal 301 and another wireless charging module 322 corresponding to the second stage wireless charging module 302 are provided on the rear portion of the second stage air purifying apparatus 2.

The second stage connection terminal 301 and the second stage connection portion 321 can be completely connected to each other by completely mounting the second stage air purifying apparatus 2 on the second pedestal 5. In other words, when all the second stage air purifying apparatus 2 is inserted along the rail 304, the mutual operation setting can be completed in a state where the second stage air purifying apparatus and the rail are in positional correspondence with each other. For example, the physical wired connection can be completed in such a manner that the second stage connection terminal 301 is fitted to the second stage connection portion 321. The signal connection between the second stage wireless charging module 302 and another wireless charging module 322 can be completed without physical contact and wireless charging can be performed.

By connecting the second stage connection terminal 301 and the second stage connection portion 321, the second stage air purifying apparatus 2 can communicate with other components provided in the air purifying system of the embodiment. As another example, wire charging may be performed.

The second stage connection terminal 301 and the second stage wireless charging module 302 may be provided not at the backbone but at the rear portion of the second stage pedestal 5. In this case, the second stage connection portion 321 and another wireless charging module 322 may be provided at corresponding positions of the second stage air purifying apparatus 2.

It will be described with reference again to Fig. 5.

The second stage pedestal 5 is as close as possible to the first stage air purifying apparatus 1 in the vertical direction, so that the installation space of the air purifying system can be reduced. Using this, the second stage pedestal 5 can perform the function of the wind direction of the discharge wind of the first stage air purifying apparatus 1.
The sectional surface of the second stage flow path guide 306 on the lower surface of the second stage pedestal 5 increases in height as it goes outward from the center toward the outside, and is bent upwardly convexly. The second stage flow path guide 306 may be provided in a radially identical shape.

The second stage flow path guide 306 can perform the role of changing the flow direction of the clean air discharged from the first stage air purifying apparatus 1. More precisely, the wind direction of the clean air of the discharge air can be changed from the above axial direction priority to the radial direction priority. According to this, it is possible to provide a region in which clean air is preferentially blown by concentrating on the side closest to the first stage air purifying apparatus without spreading the discharge wind of the first stage air purifying apparatus 1 widely.

According to the second stage flow path guide 306, the convenience of the user can be further improved by utilizing the interaction between the integrated subcomponents.

The third stage pedestal 6 is provided at the upper-end portion of the backbone 8.

The roles of the third stage frame 315 and the third stage beam 313 provided in the third stage pedestal 6 are similar to the second stage frame 305 and the second stage beam 30. However, the edge portion of the third stage frame 315 may protrude slightly upward so that the third stage air purifying apparatus 3 can be prevented from being reversed or deviating from the position even when there is an external impact in a state where the third stage air purifying apparatus 3 is seated.

Hereinafter, the configuration of the third stage pedestal 6 different from the second stage pedestal 5 will be described.

A third stage fitting stand 314 protruding upward is provided at the front end portion of the third stage frame 315 and a third stage seating protrusion 317 is provided at the central portion of the third stage frame 315. The third stage fitting stand 314 and the third stage seating protrusion 317 are for correctly positioning the third stage air purifying apparatus 3 on the third stage frame 315.

The third stage fitting stand 314 is for allowing the user to approximately grasp the position of the third stage air purifying apparatus 3 placed in the vertical direction.

This will be described in detail. There is an example in which the user seats the third stage air purifying apparatus 3 on the third pedestal 6 as an example of using the air purifying system according to the embodiment. In this case, the user stands in front of the air purifying system and puts down the third stage air purifying apparatus 3. Since the user stands in front of the air purifying system, the alignment of the air purifying apparatus and pedestal can be easily seen in the lateral direction. However, alignment in the front and rear direction is not well known in the field of view.

In this case, it is possible to confirm the approximate alignment between the apparatus and the pedestal by using the front end of the third stage air purifying apparatus 3 and the third stage fitting stand 314.

The third stage seating protrusion 317 can be positioned by fine alignment of the third stage air purifying apparatus 3 in a state where the pedestal and the air purifying apparatus are approximately aligned by the third stage fitting stand 314. The protruding edge portion of the third stage frame 315 can be seated in a state of being aligned the base of the third stage air purifying apparatus with each other, by the action that the third stage seating protrusion 317 and the third stage fitting stand 314 are aligned together.

The action of the third stage wireless charging module 312 and the third stage connection terminal 311 performing a similar action to the second stage connection terminal 301 and the second stage wireless charging module 302 will be described with reference to other drawings.

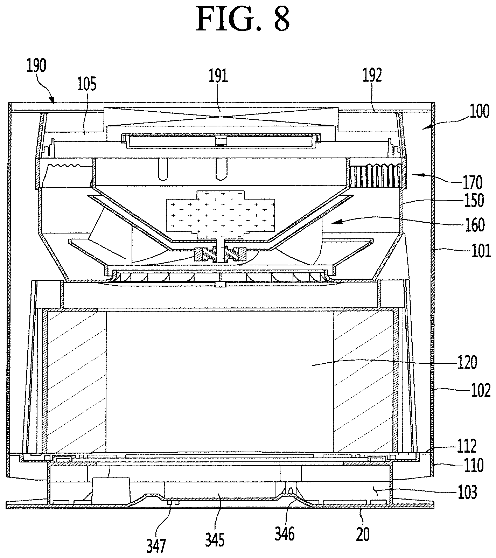

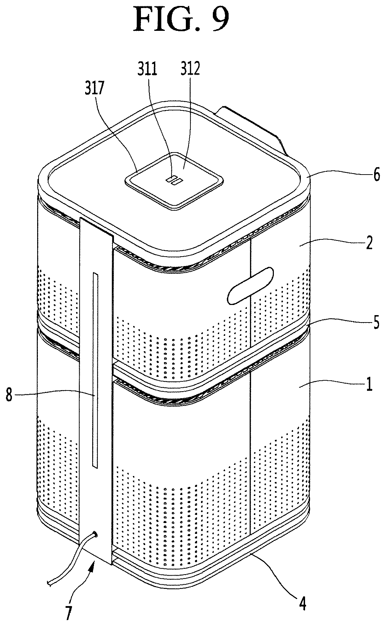

Fig. 8 is a sectional view illustrating the third stage air purifying apparatus, and Fig. 9 is a rear perspective view illustrating the air purifying system in a state where the third stage air purifying apparatus is separated.

Referring to Figs. 8 and 9, a third stage seating groove 346 is provided with a groove structure corresponding to the third stage seating protrusion 317. The seating protrusion 317 and the seating groove 346 have a configuration corresponding to each other and being capable of being inserted. When the seating protrusion 317 and the seating groove 346 are fitted to each other, the third stage air purifying apparatus 3 does not rock against the external impact and may not fall or be reversed.

In the third stage seating groove 346, another wireless charging module 345 corresponding to the third stage wireless charging module 312 and a third stage connection portion 347 corresponding to the third stage connection terminal 311 are provided. Functions of the respective components are the same as those of the second stage connection terminal 301 and the second stage wireless charging module 302, and therefore, detailed description thereof will be omitted.

It will be described with reference again to Fig. 5.

A third stage flow path guide 316 similar to the second stage flow path guide 306 may be provided on the lower surface of the third stage pedestal 6. The function and action of the second stage flow path guide 306 can be applied to the third stage flow path guide 316 as well. However, the interval between the third stage flow path guide 316 and the second stage air purifying apparatus 2 may be adjusted to adjust the wind direction and wind speed in the radial direction.

The third stage pedestal 6 can be sagged by the weight of the third stage air purifying apparatus 3, and the sagging phenomenon can be further increased by repeated use. This is because the third stage pedestal 6 is connected only to the backbone 8 so that the entire weight is supported. In other words, this is because the third stage pedestal 6 is the same as the one-point support beam. In this case, the insertion of the second stage air purifying apparatus may be interrupted. This problem can lead to fatal problems in the use of air purifying systems.

A configuration corresponding to the sagging problem of the pedestal will be described below.

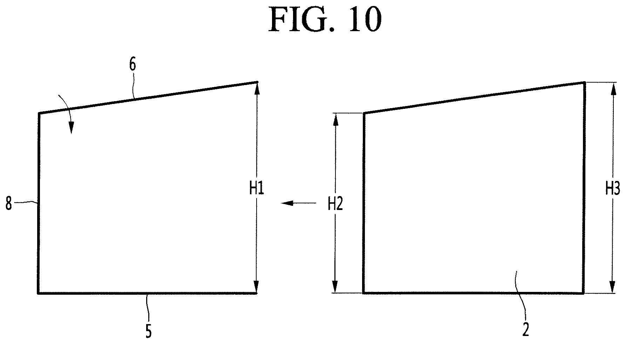

Fig. 10 is a view schematically illustrating the relationship between the second stage air purifying apparatus and the placement frame where the second stage air purifying apparatus is inserted. In Fig. 10, each line segment can be regarded as connecting the inner surface of each corresponding member and more precisely, each line segment can be defined as a line segment which is virtually linearly connected to a portion causing interference at the time of inserting the second stage air purifying apparatus 2.

Referring to Fig. 10, the interval H1 between the front portions of the third stage pedestal 6 and the second stage pedestal 5, the interval H2 between the rear portions of the second stage air purifying apparatus 2, and the interval H3 between the front portions of the second stage air purifying apparatus 2 may have the relation of the following equation.

$$[\text{Equation 1}]$$

$$H1 > H2, \text{ and } H2 < H3$$

One satisfying at least one of the above conditions

According to Equation 1, so that the second stage air purifying apparatus 2 enters the pedestal through the rail 304, it is preferable that the interval H1 between the front portions of the third stage pedestal 6 and the second stage pedestal 5 is larger than the interval H2 between the rear portions of the second stage air purifying apparatus 2. More preferably, even in a case where the third stage pedestal 6 sags, it is preferable that a relationship of H1>H2+5cm is satisfied so that there is no problem.

The interval H3 of the front portions of the second stage air purifying apparatus 2 can be provided to be larger than the interval H2 of the rear portions of the second stage air purifying apparatus 2. According to this configuration, even in a case where the interval is reduced due to sagging of the third stage pedestal 6, the second stage air purifying apparatus 5 once inserted can be inserted while having a wide the interval between the pedestals 5 and 6. It can be understood that the second stage air purifying apparatus 2 acts as a wedge.

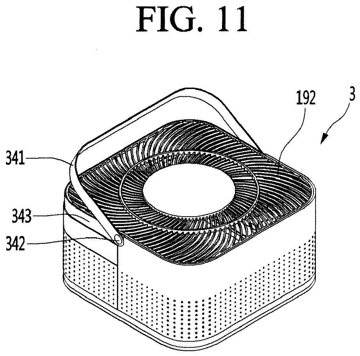

Fig. 11 is a front perspective view illustrating the third stage air purifying apparatus.

Referring to Fig. 11, a discharge grill 192 may be provided on the periphery of the display 191 about the display 191 on the upper surface of the third stage air purifying apparatus 3.

A handle 341 is provided on one side of the third stage air purifying apparatus 3. The user can use the handle 341 to move the third stage air purifying apparatus 3 conveniently. Since the third stage air purifying apparatus 3 has the smallest capacity, the user can move the third stage air purifying apparatus 3 with his own force without the help of a separate device.

The handle 341 is fixed to the case 101 by a hinge 342 and is rotatable. The handle 341 can be placed in the placement groove 343 which is recessed at the upper-end portion of the case 101 in a state where the handle 341 is not used. According to this, it is possible to prevent the external object from hooking the handle and the third stage air purifying apparatus 3 or the air purifying system being totally reversed.

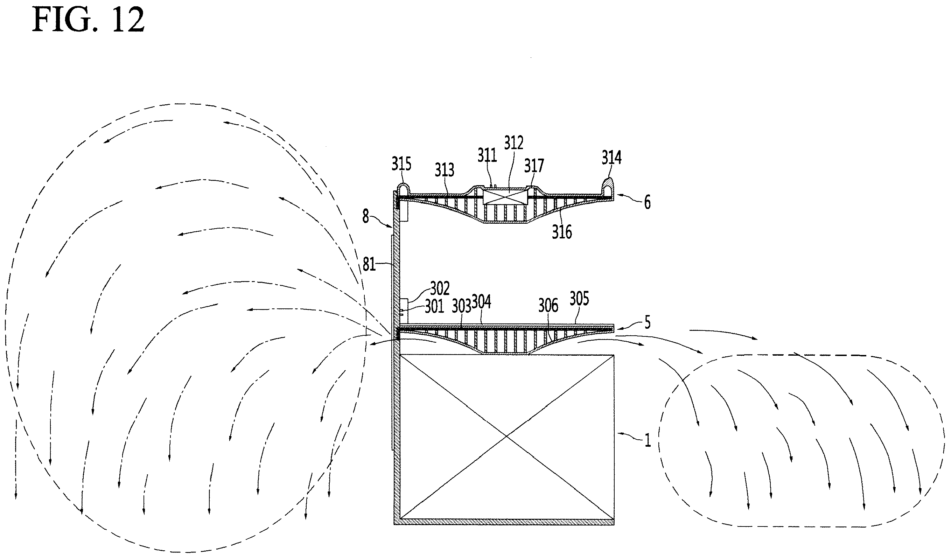

Fig. 12 is a view for explaining the action of the second stage flow path guide in more detail.

The second stage flow path guide 306 has been described in which the flow direction of the clean air discharged from the first stage air purifying apparatus 1 is changed from the axial direction priority to the radial direction priority. In Fig. 12, the arrows illustrate the flow of the discharge wind discharged from the first stage air purifying apparatus 1. Referring to the arrows, a relatively large flow rate of clean air immediately before the discharge wind of the first stage air purifying apparatus 1 is discharged is collected and blown to a specific area.

Since the specific area corresponds to the side closest to the first stage air purifying apparatus, the specific area can be defined as a side purifying region. The side purifying region is indicated by a dotted line on the right side of the air purifying apparatus.

As described above, the discharge wind of the first stage air purifying apparatus 1 is not spread widely. Especially, the discharge wind of the first stage air purifying apparatus 1 does not spread widely in the vertical direction. Therefore, it is possible to make the side purifying region concentrated on the side closest to the first stage air purifying apparatus 1 so that the clean air is blown first.

A diffusion purifying region, which is opposed to the side purifying region, is indicated by a dotted line on the left side of the first stage air purifying apparatus. The diffusion purifying region may mean an area affected by the clean air discharged from the first stage air purifying apparatus 1 in a case where the second stage flow path guide 306 is not provided. Since the axial flow rate of the discharge wind is high, it is illustrated that the first stage air purifying apparatus 1 diffuses more widely in the vertical direction and the lateral direction.

The side purifying region can be provided in a space of 50 centimeters or less from the floor serving as a playground for infants. This can be more preferably applied in a case where intensive air purifying is required for the adjacent positions of the air purifying apparatus, for example, after returning home, or in a case where the air purifying apparatus has a shortage of capacity or the operation of the air purifying apparatus is started immediately.

Hereinafter, the function of the air purifying system according to the embodiment will be described in more detail. Particularly, the operation in a state where the air purifying apparatus separately used is mounted on the placement frame will be mainly described. In the following description, the separate reference numerals may be used for the sake of convenience of understanding, even though they are components already described above. For example, the illumination light provided on the main body side originally uses the reference numeral 81, but the reference numeral 735 is used in the present description. As another example, the wireless charging module uses the reference numeral 322 and 345, but the reference numeral 731 is used in the present description.

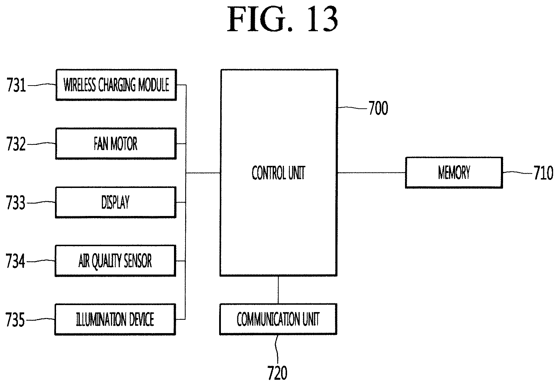

Fig. 13 is a block diagram illustrating the air purifying apparatus.

Referring to Figs. 5 and 13, a control unit 700, a memory 710, and a communication unit 720 are provided in the air purifying apparatuses 1, 2, and 3 to control each equipment by itself, stores required information and can communicate with each other.

A wireless charging module 731, a fan motor 732, a display 733, and an air quality sensor 734 may be provided as the drive portion of the air purifying apparatus 2 and 3 which can be separated. The air purifying apparatus 1, which is integrated with the placement frame 7, may additionally be provided with an illumination device 735.

A second stage connection terminal 301 and a second stage wireless charging module 302 are provided in the backbone 8 adjacent to the rear portion of the second stage frame 305 for charging operation of the second stage air purifying apparatus 2. The second stage connection portion 321 corresponding to the second stage connection terminal 301 and another wireless charging module 322 corresponding to the second stage wireless charging module 302 is provided at the rear portion of the second stage air purifying apparatus 2 for charging operation of the second stage air purifying apparatus 2.

The second stage connection terminal 301 and the second stage connection portion 321 can be completely connected to each other by completely mounting the second stage air purifying apparatus 2 on the second stage pedestal 5. In other words, when the second stage air purifying apparatus 2 is inserted all along the rail 304, the mutual operation setting can be completed in a state of being in positional correspondence with each other. For example, the physical wired connection can be completed in such a manner that the second stage connection terminal 301 is fitted to the second stage connection portion 321. As another example, the wireless connection may be completed by communication between the communication units 720.

The signal connection between the second stage wireless charging module 302 and another wireless charging module 322 can be completed without physical contact and wireless charging can be performed.

A third stage wireless charging module 312 and a third stage connection terminal 311 are provided on the upper surface of the third stage frame 315 for charging operation of the third stage air purifying apparatus 3. Another wireless charging module 345 corresponding to the third stage wireless charging module 312 and the three stage connection portion 347 corresponding to the third stage connection terminal 311 are provided on the lower portion of the third stage air purifying apparatus 3 for charging operation of the third stage air purifying apparatus 3.

The functions of the respective components may be the same as those of the second stage connection terminal 301 and the second stage wireless charging module 302.

According to the above-described configuration and action, each air purifying apparatus can be charged wirelessly or wired.

The illumination device 735 may be operated in various modes under the control of the control unit 700. For example, it is provided on the backbone 8 facing the wall to indirectly illuminate the indoor space without interference to the user by providing indirect illumination reflected from the wall surface. In addition, by changing the color or the like, the air quality of the indoor space may be displayed.

According to the present invention, it is possible to perform various air purifying actions corresponding to an indoor space by using a single air purifying system provided with a plurality of air purifying apparatuses, so that industrial application is highly expected.

**Claims**

1. An air purifying system comprising:

   at least two air purifying apparatuses (1, 2) capable of being operated independently; and
   a placement frame (7) configured to prop and support from below the at least two air purifying apparatuses (1, 2), the placement frame (7) being configured to restrict movement thereof, wherein the placement frame (7) includes:

   a backbone (8) extending in a vertical direction; and
   at least two pedestals (5, 6) supported by the backbone (8) to extend forwardly, spaced apart from each other by a predetermined interval (H1) in the vertical direction, and corresponding to the at least two air purifying apparatuses (1, 2), respectively.

2. The air purifying system of claim 1,
   wherein at least one of at least two air purifying apparatuses (1, 2) is movable to an upper side of one of at least two pedestals (5, 6) to be separated from the placement frame (7).

3. The air purifying system of claim 1 or 2,
   wherein at least one of at least two pedestals (5, 6) includes:

   a frame (315), an edge of which protrudes to an upper side;
   a fitting stand (314) protruding upward from the front of the frame (315);
   a seating protrusion (317) provided on an upper surface of the frame (315);
   a wireless charging module (312) provided on the frame (315) to charge the air purifying apparatus; and
   a connection terminal (311) provided on the frame (315) and connected to the air purifying apparatus.

4. The air purifying system of any one of claims 1 to 3,
   wherein at least one of at least two air purifying apparatuses (1, 2) is movable forward to be separated from the placement frame (7) out of the interval (H1) between two adjacent ones of the at least two pedestals (5, 6).

5. The air purifying system of claim 4,
   wherein a rail (304) extending in a front and rear direction is provided on an upper surface of a pedestal (5) placed below one of the two adjacent pedestals (5, 6).

6. The air purifying system of any one of claims 1 to 5,
   wherein at least one of the at least two pedestals (5, 6) is provided with a flow path guide (306, 316) in which the lower surface of the pedestal (5, 6) increases in height from the center thereof to the outer side and which has a convex section toward the upper side so that a component of the discharged air flow rate discharged from the lower side in a radial direction is increased.

7. The air purifying system of claim 6,
   wherein the flow path guide (306, 316) is provided in at least one of the at least two pedestals (5, 6).

8. The air purifying system of claim 6 or 7,
   wherein the flow path guide (306, 316) provides a side purifying region which is provided adjacent to the air purifying system.

9. The air purifying system of any one of claims 1 to 8,
   wherein at least one of at least two air purifying apparatuses (1, 2) is provided with a square horizontal section.

10. The air purifying system of any one of claims 1 to 9,
    wherein an interval (H1) of the front portions of two adjacent ones of the at least two pedestals (5,6) in the vertical direction is larger than an interval (H2) of the rear portion of one of the at least two air purifying apparatuses (1, 2) in the vertical direction determined to be inserted into the placement frame (7).

11. The air purifying system of claim 10,
    wherein an interval (H2) of a rear portion of one of the at least two air purifying apparatuses (1, 2) in the vertical direction determined to be inserted into the placement frame (7) is smaller than an interval (H3) of the front portion thereof in the vertical direction.

12. The air purifying system of any one of claims 1 to 11, further comprising:
    an illumination light (81) which is provided in the backbone (8) and irradiates light.

13. The air purifying system of any one of claims 1 to 12,
    wherein at least one of the backbone (8) and the pedestal (5, 6) is provided with a wireless charging module (312), and
wherein another wireless charging module (302) corresponding to the wireless charging module (312) is provided in any one of at least two air purifying apparatuses (1, 2).

14. The air purifying system of any one of claims 1 to 13, further comprising:
a handle (314) rotatably provided in the air purifying apparatus (1).

15. The air purifying system of claim 14, further comprising:
a placement groove (343) provided by being recessed into a case (101) forming the outer appearance of the air purifying apparatus (1) so as to place the handle (341).

# FIG. 1

# FIG. 2

# FIG. 3

# FIG. 4

# FIG. 5

# FIG. 6

# FIG. 7

# FIG. 8

# FIG. 9

# FIG. 10

# FIG. 11

FIG. 12

# FIG. 13

731 — WIRELESS CHARGING MODULE

732 — FAN MOTOR

733 — DISPLAY

734 — AIR QUALITY SENSOR

735 — ILLUMINATION DEVICE

CONTROL UNIT — 700

MEMORY — 710

COMMUNICATION UNIT

720

Europäisches
Patentamt

European
Patent Office

Office européen
des brevets

# EUROPEAN SEARCH REPORT

Application Number

EP 20 16 3888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2017/142026 A1 (TOSHIBA CARRIER CORP [JP]) 24 August 2017 (2017-08-24)<br>* paragraph [0048] - paragraph [0080]; figures 7-24 *<br>----- | 1,2,4,<br>9-12,14<br>3,5-8,<br>13,15 | INV.<br>F24F3/16<br>F24F13/20<br>F24F13/32 |
| X<br><br>A | WO 2004/014521 A1 (PLYMOVENT AB [SE]; SHARIFI ASSAR [SE])<br>19 February 2004 (2004-02-19)<br>* page 5 - page 8; figures 1-5 *<br>----- | 1,2,4,<br>9-11<br><br>3,5-8,<br>12-15 | |
| A | KR 2016 0077888 A (POSCO [KR])<br>4 July 2016 (2016-07-04)<br>* abstract; figure 1 *<br>----- | 1,2 | |

TECHNICAL FIELDS
SEARCHED (IPC)

F24F

The present search report has been drawn up for all claims

| Place of search | Date of completion of the search | Examiner |
|---|---|---|
| Munich | 31 July 2020 | Anconetani, Mirco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 16 3888

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2020

| Patent document cited in search report | | Publication date | Patent family member(s) | | Publication date |
|---|---|---|---|---|---|
| WO 2017142026 | A1 | 24-08-2017 | CN | 108700310 A | 23-10-2018 |
| | | | JP | 6690044 B2 | 28-04-2020 |
| | | | JP | 2019163926 A | 26-09-2019 |
| | | | JP | 2019163927 A | 26-09-2019 |
| | | | JP | 2020038056 A | 12-03-2020 |
| | | | JP | WO2017142026 A1 | 02-08-2018 |
| | | | KR | 20180100436 A | 10-09-2018 |
| | | | WO | 2017142026 A1 | 24-08-2017 |
| WO 2004014521 | A1 | 19-02-2004 | AU | 2003252604 A1 | 25-02-2004 |
| | | | CA | 2494918 A1 | 19-02-2004 |
| | | | EP | 1539327 A1 | 15-06-2005 |
| | | | SE | 523303 C2 | 13-04-2004 |
| | | | US | 2006162300 A1 | 27-07-2006 |
| | | | WO | 2004014521 A1 | 19-02-2004 |
| KR 20160077888 | A | 04-07-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190031509

- WO 2017026761 A1